# EUROPÄISCHE PATENTSCHRIFT

(11) **EP 1 378 673 B1**
(45) Veröffentlichungstag und Bekanntmachung des Hinweises auf die Patenterteilung: **24.09.2014**
(21) Anmeldenummer: 03012343.4
(22) Anmeldetag: 30.05.2003
(51) Int. Cl.: F16C 11/04, B60N 2/22

(54) **Spielfreies Gelenk für Kraftfahrzeugsitze**
Pivot free from play for car seats
Articulation sans jeu pour des sièges d'une automobile

(30) Priorität: 05.07.2002 DE 10230589
(43) Veröffentlichungstag der Anmeldung: 07.01.2004
(73) Patentinhaber: C.Rob. Hammerstein GmbH & Co.KG, 42699 Solingen (DE)
(72) Erfinder: Becker, Burckhard, 42657 Solingen (DE); Beneker, Wilfried, Dr., 42799 Leichlingen (DE)
(74) Vertreter: Bauer, Wulf

(56) Entgegenhaltungen:
- DE-A- 4 030 855
- DE-A- 19 731 305
- DE-A- 19 931 837
- DE-C- 19 614 691
- GB-A- 2 318 613
- GB-A- 2 367 857
- US-A1- 2001 046 411

## Beschreibung

Die Erfindung bezieht sich auf ein spielfreies Gelenk für Kraftfahrzeugsitze, beispielsweise für Sitzverstelleinrichtungen, also insbesondere Gelenkverbindungen zwischen einer Rückenlehne und einem Sitzträger oder Gelenkverbindungen an Parallelogrammarmen, die sich zwischen einem Sitzträger und einer Längsverstellvorrichtung befinden.

Aus DE 197 31 305 C2 ist ein spielfreies Gelenk für Kraftfahrzeugsitze, mit a) einem ersten Gelenkarm und einem zweiten Gelenkarm, die jeweils eine Bohrung aufweisen, mit b) einem diese Bohrungen durchgreifenden Gelenkstift, wobei die Bohrung des ersten Gelenkarms axial hintereinander einen Haltebereich und einen Ausgleichsbereich aufweist, der Ausgleichsbereich größere radiale Innenabmessungen hat als der Haltebereich und der Ausgleichsbereich von einem kegeligen Innenmantel begrenzt wird und c) mit einem Ausgleichskörper, der am Innenmantel und am Gelenkstift anliegt und bei der Montage des Gelenks axial so belastet ist, dass er verformt ist und den Raum zwischen Gelenkstift und Innenmantel1 ausfüllt, bekannt. Der Ausgleichskörper ist im Wesentlichen scheibenförmig, hat aber einen axialen Vorsprung, der in den Lagerspalt eindringen kann.

Das Dokument GB 2 318 613 A zeigt Gelenke für schwenkbare Arme eines Fensters. In Figur 8 ist ein einzelnes Gelenk gezeigt, wobei die Bohrung eines Gelenkarms einen zylindrischen Haltebereich, daran anschließend eine radiale Stufe und einen Innenmantel mit einem kegeligen Teil und einem zylindrischen Teil aufweist. Der Ausgleichsbereich zwischen Niet, Stufe und Innenmantel ist mit einer zunächst flachen und dann verformten Kunststoff ringscheibe ausgefüllt.

Bei Gelenkverbindungen von Kraftfahrzeugsitzen ist Spielfreiheit der Gelenkverbindung ein wichtiges Ziel. Aufgrund der relativ grossen Länge einer Rückenlehne macht sich beispielsweise schon ein kleines Lagerspiel in der Gelenkverbindung der Rückenlehne am Sitzträger deutlich bemerkbar, man kann es an der oberen Kante einer Rückenlehne spüren.

Gelenkverbindungen in Kraftfahrzeugsitzen werden einerseits nur relativ selten verstellt und andererseits erfolgt die Verstellung ausgesprochen langsam, zumeist mit deutlich weniger als eine Umdrehung pro Minute. Ohnehin sind die meisten Gelenkverbindungen lediglich Schwenkverbindungen, eine volle Umdrehung um 360° wird nicht benötigt, zumeist liegt der Bewegungsbereich unterhalb von 180°.

Bei dem spielfreien Gelenk nach der DE 197 31 305 C2 ist ein kontrolliertes Eindringen des Vorsprunges in den Lagerspalt nicht immer sicher zu erreichen. Es muss bei der Montage darauf geachtet werden, dass der Montagespalt vollständig umlaufen ist, der Gelenkstift also nicht an einer Stelle an der Innenwand der zugehörigen Bohrung anliegt. Es wird auch nur ein relativ kleiner axialer Anteil der Gesamtaxiallänge der Bohrung benutzt, der grösste Anteil der Axiallänge der Bohrung bleibt ohne Spielausgleich.

Hier setzt nun die Erfindung ein. Sie hat es sich zur Aufgabe gemacht, ein spielfreies Gelenk anzugeben, bei dem ein sicherer Spielausgleich über eine vorbestimmbare axiale Länge erreicht wird.

Gelöst wird diese Aufgabe durch die Merkmale des Patentanspruchs 1.

Bei diesem spielfreien Gelenk wird mindestens ein Gelenkarm spielfrei gemacht, es ist aber auch möglich, beide Gelenkarme gegenüber dem Gelenkstift spielfrei auszubilden. Die Bohrung wird für die Aufnahme des Ausgleichskörpers vorbereitet. Hierzu ist sie in zwei unterschiedliche, axial hintereinander angeordnete Teilbereiche unterteilt. Sie hat einen Haltebereich, der den Gelenkstift relativ eng umgreift, dies mit einem Spiel innerhalb der Herstellungstoleranzen. An diesen Haltebereich schliesst sich ein Ausgleichsbereich an, der vorzugsweise länger ist als der Haltebereich. Der Ausgleichsbereich ist vorbereitet für die Aufnahme eines axial montierbaren Ausgleichskörpers. Der Ausgleichsbereich innerhalb der Bohrung wird begrenzt durch die im wesentlichen radial verlaufende Stufe, die sich an den Haltebereich anschliesst, und den Innenmantel. Letzterer ist vorzugsweise kegelförmig.

Unabhängig von speziellen Montagebedingungen wird stets erreicht, dass bei der Montage der Ausgleichskörper axial in den Ausgleichsbereich eingeschoben werden kann. Er kommt in Anlage an die Stufe, die eine radiale Schulter bildet. Diese Anlage ist messtechnisch erfassbar. Nach dem erfolgten Einschieben befindet sich noch ein Spalt zwischen Ausgleichskörper und Innenmantel bzw. Gelenkstift. Dieser Spalt ist für das Zusammenfügen notwendig. Durch axiale Kompression, die beispielsweise durch Verschrauben oder insbesondere durch Vernieten erhalten wird, wird nun der Ausgleichskörper ausgehend von einem Ausgangszustand so deformiert, dass der Raum zwischen Gelenkstift, Stufe und Mantel ausgefüllt ist, also Spielfreiheit vorliegt.

Der Haltebereich dient dabei insbesondere der präzisen Positionierung, der Ausgleichsbereich dient dem Spielausgleich und der gezielten Aufnahme des Ausgleichskörpers.

Aufgrund der Stufe wird bei der Montage ein klar spürbarer Anschlag erhalten, wenn der Ausgleichskörper axial in den Ausgleichsbereich eingeschoben wird. Zudem wird ein definierter Zustand geschaffen bei der späteren axialen Kompression des Ausgleichskörpers. Beim axialen Belasten und Spannen stützt sich der Ausgleichskörper an der Stufe ab. Dadurch wird eine gezielte radiale Verformung möglich. Es werden insgesamt definierte Verhältnisse für die Verformung des Ausgleichskörpers erhalten. Die Erfindung eignet sich daher insbesondere für die Serienfertigung, sie macht es nicht erforderlich, jede einzelne Gelenkverbindung speziell einstellbar zu machen, wie dies nach der vorbekannten Patentschrift vorgesehen ist, die lediglich axiales Spannen durch Schrauben zeigt.

In einer bevorzugten Weiterbildung liegt der Innenmantel auf einem Kegel mit einem Öffnungswinkel zwischen 0 und 45°. Dadurch werden günstige Kräfteverhältnisse beim Einpressen des Ausgleichskörpers, also beim Spielfreimachen des Gelenkes, erzielt.

Der Ausgleichsbereich ist zu einer der Oberflächen des ersten Gelenkarms hin zugänglich, insbesondere zu der vom Berührungsbereich der beiden Gelenkarme abgewandten Oberfläche. Der Ausgleichsbereich ist so ausgeführt, dass der Ausgleichskörper durch axiales Einschieben eingebracht werden kann.

Beim Spielfreimachen der Gelenkverbindung wird der Ausgleichskörper verformt. Vorzugsweise hat der Ausgleichskörper vor der Montage des Gelenkes eine grössere axiale Länge als der Abstand zwischen der Stufe und einer Fläche des ersten Gelenkarmes, von der aus der Ausgleichsbereich zugänglich ist. Die axiale Länge des Ausgleichskörpers verkürzt sich beim Spielfreimachen, dafür dehnt sich der Ausgleichskörper radial aus.

Wie auch beim vorbekannten Patent DE 197 31 305 C2 ist es vorzuziehen, den Gelenkstift mit einer radialen Schulter auszubilden. Diese soll aber nun sich entweder an einer Innenfläche des ersten Gelenkarmes oder einer dieser unmittelbar gegenüberliegenden Innenfläche des zweiten Gelenkarmes abstützen. Beim Spielfreimachen bewirkt die Schulter somit einen definierten Anschlag. Anders ausgedrückt wird die axiale Kompression so durchgeführt, dass die radiale Schulter zur Anlage kommt, ist dies erreicht, kann auch die axiale Kompression beendet werden.

Für den Ausgleichskörper eignen sich insbesondere Kunststoffe. Vorzugsweise werden Kunststoffe eingesetzt, die sich mechanisch unter Druck verformen lassen, dabei im wesentlichen fliessen, also ihren Zusammenhalt nicht verlieren, und zwar dies auch nicht teilweise, also nicht einreissen oder dergleichen. Als geeignet hat sich beispielsweise Niederdruckpolyethylen erwiesen, also LDPE.

Das Material des Ausgleichskörpers soll gute Gleiteigenschaften aufweisen. Es soll möglichst wenig Wasseraufnahme zeigen, temperaturbeständig sein und eine gute Langzeitbeständigkeit aufweisen.

In einer besonders bevorzugten Ausführung hat der Ausgleichsbereich eine axiale Länge, die nicht kleiner ist als 50 % der Dicke des ersten Gelenkarmes. Vorzugsweise ist die axiale Länge des Ausgleichsbereiches grösser als diejenige des Haltebereiches. Damit steht genügend axialer Raum für den Spielausgleich zur Verfügung. Hierin wird eine besondere Verbesserung gesehen, Gelenkverbindungen bei Großserien spielfrei zu machen.

Weitere Vorteile und Merkmale der Erfindung ergeben sich aus den übrigen Ansprüchen sowie der nun folgenden Beschreibung nicht einschränkend zu verstehender Ausführungsbeispiele, die unter Bezugnahme auf die Zeichnung im folgenden näher erläutert werden. In dieser Zeichnung zeigen:
- Figur 1:: Ein als Axialschnitt ausgeführtes Montagebild einer Gelenkverbindung, zur Darstellung der Einzelteile vor der Montage,
- Figur 2:: ein Axialschnittbild einer Ausführung ähnlich Figur 1, jedoch nun im zusammengebauten Zustand,
- Figur 3:: eine perspektivische Darstellung eines Ausgleichskörpers,
- Figur 4:: eine perspektivische Darstellung eines weiteren Ausgleichskörpers und
- Figur 5:: eine perspektivische Darstellung eines dritten Ausgleichskörpers.

Ein erster Gelenkarm 20 und ein zweiter Gelenkarm 22 haben jeweils eine Bohrung 24 bzw. 26. Ein Gelenkstift 28 ist so ausgeführt, dass er die beiden Bohrungen 24, 26 durchgreifen kann und nach Vernieten, also Ausbilden eines Nietkopfes an seinem freien Ende, eine Schwenkachse bildet.

Die beiden Gelenkarme 20, 22 sind hier nur schematisch dargestellt. Sie können beliebige Form haben, beispielsweise Lagerböckchen, Schwingen, ein Rückenlehnenträger, ein Sitzträger oder dergleichen sein. Typischerweise sind die Gelenkarme 20, 22 aus Blech gefertigt, das Blech hat eine Dicke im Bereich um beispielsweise 2 mm. Die Blechdicke ist grundsätzlich aber für die Erfindung unwesentlich.

Anstelle eines Gelenkstiftes 28 kann auch ein Schraubbolzen oder jede andere Art von Bolzen eingesetzt werden, der für die Achse einer Gelenkverbindung geeignet ist.

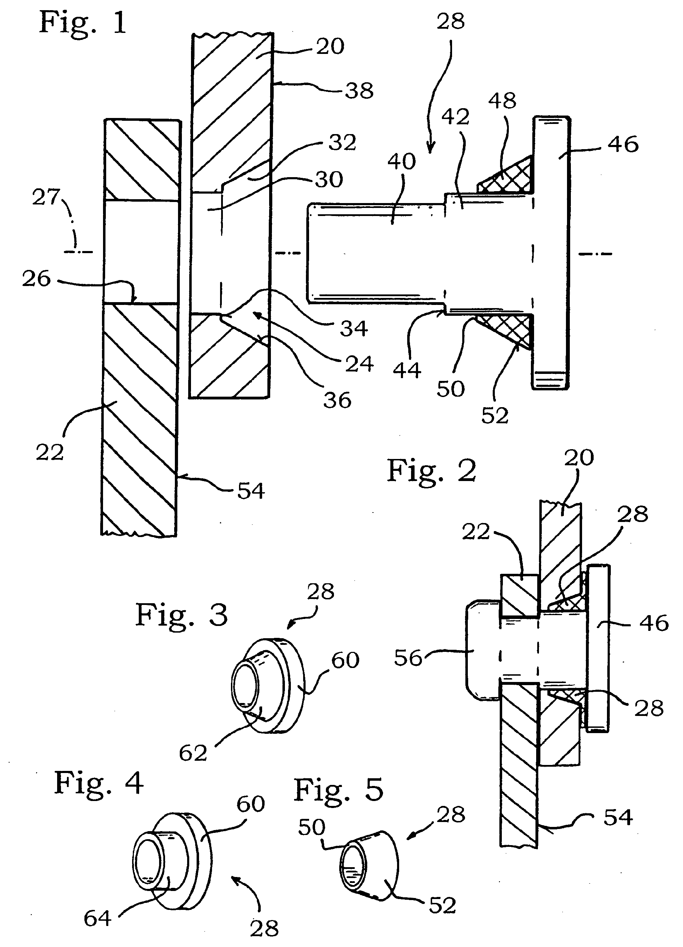

Wie Figur 1 zeigt, ist die Bohrung 24 des ersten Gelenkarmes gestuft ausgeführt. Sie setzt sich zusammen aus einem Haltebereich 30 und einem Ausgleichsbereich 32. Im Haltebereich 30 hat die Bohrung 24 einen Durchmesser, der an den Aussendurchmesser des Stiftes 28 angepasst ist, sodass im Haltebereich 30 die wesentliche Positionierung des Gelenkstiftes 28 innerhalb der Bohrung 24 erfolgen kann.

Der Ausgleichsbereich 32 hat einerseits grössere radiale Innenabmessungen als der Haltebereich 30 und andererseits hat er auch eine grössere axiale Länge als der Haltebereich 30. Er wird begrenzt von einer Stufe 34, die sich unmittelbar an den Haltebereich 30 anschliesst und von diesem eine Aufweitung bildet und von einem Innenmantel 36. Der Innenmantel 36 ist am Aussenrand der Stufe 34 angesetzt und erstreckt sich zur vom Verbindungsbereich der beiden Gelenkarme 20, 22 abgewandten äusseren Oberfläche 38, von dort ist er zugänglich. Im gezeigten Ausführungsbeispiel liegt der Innenmantel 36 auf einem Kegelmantel, dessen Öffnungswinkel etwa 60° beträgt. Die Gelenkachse ist mit 27 bezeichnet.

Die Bohrung 26 des zweiten Gelenkarmes 22 ist eine normale, zylindrische Bohrung wie der Haltebereich 30 auch. Gegenüber dem Haltebereich 30 ist aber der Innendurchmesser kleiner, beispielsweise 5 bis 30 % kleiner.

Der Gelenkstift 28 hat zwei Zylinderbereiche, nämlich einen vorderen Zylinderbereich 40, der der Bohrung 26 des zweiten Gelenkarms 22 angepasst ist und einen hinteren Zylinderbereich 42, der so ausgeführt ist, dass er möglichst präzise in den Haltebereich 30 passt. Beide Zylinderbereiche 40, 42 sind durch eine radiale Schulter 44 getrennt. Der Gelenkstift 28 hat schliesslich einen Kopf 46, der als flacher zylindrischer Körper ausgeführt ist.

Auf den hinteren Zylinderbereich 42 ist in Figur 1 bereits ein Ausgleichskörper 48 aufgeschoben. Er hat Ringform und ist so ausgeführt, dass er in den Raum eingefügt werden kann, der begrenzt wird durch die Stufe 34, den Innenmantel 36 und den hinteren Zylinderbereich 42. Der Ausgleichskörper 48 hat eine grössere axiale Länge als die axiale Länge des Ausgleichsbereiches 32 beträgt. Wird er in den Ausgleichsbereich 32 eingesetzt, so ragt er im Bereich der äusseren Oberfläche 38 vor, beispielsweise um mehrere mm. Der Ausgleichskörper 48 hat eine Stufenfläche 50, die der Stufe 34 angepasst ist, und eine Mantelfläche 52, die im Winkelverlauf usw. dem Innenmantel 36 angepasst ist. Insgesamt ist der Ausgleichskörper 48 so geformt, dass er axial unmittelbar in den Ausgleichsbereich 32 eingefügt werden kann, ohne dass es hierzu besonderer Vorkehrungen bedarf. Er füllt im lediglich eingefügten Zustand den Ausgleichsbereich 32 nahezu, aber eben nicht vollständig aus, vielmehr bleiben Fügespalte frei.

Es wird nun beschrieben, wie die Montage und das Spielfreimachen der Anordnung gemäss Figur 1 erfolgen, um eine Gelenkverbindung wie in Fig. 2 gezeigt zu erhalten: Wird der Gelenkstift 28 durch die Bohrungen 24, 26 gesteckt, so fädelt der hintere Zylinderbereich 42 in den Haltebereich 30 ein, bevor der Ausgleichskörper 48 Kontakt mit den Innenwänden des Haltebereiches 30 aufnehmen muss. Dadurch ist eine klare Positionierung möglich. Der vordere Zylinderbereich 40 durchgreift die Bohrung 26 und ragt aus dieser nach links hinaus. In diesem Zustand hat der Kopf 46 noch einen Abstand von der äusseren Oberfläche 38, die radiale Schulter 44 hat ebenfalls einen Abstand von einer Innenfläche 54 des zweiten Gelenkarmes. Der Ausgleichskörper 48 ragt mit einem hinteren Teilbereich, wie bereits beschrieben, aus dem Ausgleichsbereich 32 heraus.

Nun wird ein Nietvorgang durchgeführt, dieser wird möglichst präzise überwacht, beispielsweise durch Überwachen der Verformung, siehe DE 101 64 005A (nicht vor veröffentlicht). Anstelle des Nietvorgangs kann auch ein Schrauben oder ein entsprechendes axiales Spannen bzw. Belasten des Gelenkstiftes 28 erfolgen.

Aufgrund der axialen Kraft wird der Ausgleichskörper 48 in den Ausgleichsbereich 32 hineingepresst. Die Stufenfläche 50 kommt in engen Kontakt mit der Stufe 34, der Ausgleichskörper 48 dehnt sich radial nach aussen aus und füllt den Ausgleichsbereich 32 so aus, dass zumindest stellenweise zwischen Ausgleichskörper 48 und Innenmantel 36 bzw. Ausgleichskörper 48 und hinterem Zylinderbereich 42 keinerlei Spalt bzw. Spiel mehr besteht.

Nach der axialen Komprimierung ist der Kopf 46 näher an die äussere Oberfläche 38 gerückt. Ein Teilbereich des Ausgleichkörpers 48 ist in den Spalt zwischen Kopf 46 und äusserer Oberfläche 38 hineingelangt. Insbesondere aber ist die axiale Kraft so bemessen, dass die radiale Schulter 44 in Anlage an die Innenfläche 54 gelangt ist.

Es ist auch möglich, den Gelenkstift 28 in Gegenrichtung einzusetzen, dann muss die Bohrung 26 des zweiten Gelenkarms 22 größer sein als die Bohrung 24 des ersten Gelenkarms 20. In diesem Fall stützt sich die radiale Schulter 44 dann an einer Innenfläche des ersten Gelenkarms 20 ab.

Fig. 2 zeigt ein fertig gestelltes Gelenk, dass nicht mit dem Gelenk aus Fig. 1 identisch ist, aber ähnlich aufgebaut ist. Das freie Ende des Gelenkstiftes 28 ist nun zu einem Nietkopf 56 ausgeweitet. Axial ist der zweite Gelenkarm 22 zwischen der radialen Schulter 44 und dem Nietkopf 56 spielfrei eingefangen. Auch der erste Gelenkarm 20 ist axial spielfrei gehalten zwischen der Innenfläche des zweiten Gelenkarms 22 und demjenigen Teil des Ausgleichkörpers, der sich im Spalt zwischen Kopf 46 und äußerer Oberfläche 38 befindet. Der zweite Gelenkarm 22 ist aber auch radial spielfrei. Dies wird bewirkt durch den innerhalb des Ausgleichsbereichs 32 aufgeweiteten Anteil des Ausgleichskörpers 48. Dieser liegt soweit wie möglich vollflächig sowohl am Innenmantel 36 als auch an der Stufe 36 an.

Als Material des Ausgleichskörpers 48 kann neben einem geeignetem Kunststoff auch ein Metall gewählt werden, das weicher ist, als das Metall der Gelenkarme 20, 22 bzw. des Gelenkstiftes 28.

Die Bohrung 24 wird wie folgt hergestellt: Zunächst wird ein Loch etwa vom Durchmesser des späteren Haltebereichs 30, möglicherweise etwas grösser als dieser, ausgeführt, z.B. durch Bohren, Stanzen usw. Danach wird der Ausgleichsbereich geprägt, dabei wird durch einen Prägestempel Material an und in die Stelle des Haltebereichs verdrängt. Schließlich wird der Haltebereich 30 fertiggestellt, indem noch einmal gestanzt, gebohrt oder dergleichen wird, diesmal mit korrektem Innendurchmesser des Haltebereichs 30.

In den Figuren 3 bis 5 sind unterschiedliche Ausführungen für den Ausgleichskörper 48 dargestellt. Alle sind Drehteile. In der Ausführung nach Figur 3 besteht der Ausgleichskörper aus einer Scheibe 60 und einem daran angesetzten Kegelstumpfring 62, die beide den gleichen Innendurchmesser, der auch den Außendurchmesser des hinteren Zylinderbereichs 42 angepasst ist, aufweisen.

In der Ausführung nach Figur 4 ist ebenfalls eine Scheibe 60 vorgesehen, nun aber ist der eigentliche Ausgleichskörper ein Zylinderring 64. Die Axiale Länge dieses Zylinderrings 64 und die axiale Länge des Kegelstumpfs 62 sind länger als die axiale Länge des Haltebereichs 30.

Schließlich ist in Figur 5 ein Ausgleichskörper 48 gezeigt, der im wesentlichen dem Kegelstumpfring der Ausführung nach Figur 3 entspricht.

## Patentansprüche

1. Spielfreies Gelenk für Kraftfahrzeugsitze, mit a) einem ersten Gelenkarm (20) und einem zweiten Gelenkarm (22), die jeweils eine Bohrung (24 bzw. 26) aufweisen, mit b) einem diese Bohrungen (24, 26) durchgreifenden Gelenkstift (28), wobei die Bohrung (24) des ersten Gelenkarms (20) axial hintereinander einen Haltebereich (30) und einen Ausgleichsbereich (32) aufweist, der Ausgleichsbereich (32) größere radiale Innenabmessungen hat als der Haltebereich (30) und der Ausgleichsbereich (32) von einer im wesentlichen radial verlaufenden Stufe (34), die an den Haltebereich (30) anschließt, und einem Innenmantel (36) begrenzt wird und c) mit einem Ausgleichskörper (48), der am Innenmantel (36), an der Stufe (34) und am Gelenkstift (28) anliegt und bei der Montage des Gelenks axial so zur Stufe (34) hin belastet ist, dass er verformt ist und den Raum zwischen Gelenkstift (28), Stufe (34) und Innenmantel (36) ausfüllt.

2. Spielfreies Gelenk nach Anspruch 1, **dadurch gekennzeichnet, dass** der Innenmantel (36) auf einem Kegel mit einem Öffnungswinkel zwischen 0 und 90°, vorzugsweise 10 und 45° liegt.

3. Spielfreies Gelenk nach Anspruch 1, **dadurch gekennzeichnet, dass** der Ausgleichskörper (48) vor der Montage des Gelenks und vorzugsweise auch nach der Montage des Gelenks eine größere axiale Länge hat, als der Abstand zwischen der Stufe (34) und einer äusseren Oberfläche (38) des ersten Gelenkarms (20), an der der Ausgleichsbereich (32) mündet.

4. Spielfreies Gelenk nach Anspruch 1, **dadurch gekennzeichnet, dass** der Gelenkstift (28) eine radiale Schulter (44) aufweist, die sich abstützt entweder an einer Innenfläche des ersten Gelenkarms (20) oder an einer dieser unmittelbar gegenüber liegenden Innenfläche (54) des zweiten Gelenkarms (22).

5. Spielfreies Gelenk nach Anspruch 1, **dadurch gekennzeichnet, dass** der Ausgleichskörper (48) aus einem Kunststoff gefertigt ist, der mechanisch verformbar ist, insbesondere aus LDPE.

6. Spielfreies Gelenk nach Anspruch 1, **dadurch gekennzeichnet, dass** der Ausgleichsbereich (32) eine axiale Länge hat, die nicht kleiner ist als 50 % der axialen Länge des ersten Gelenkarms (20).

7. Spielfreies Gelenk nach Anspruch 1, **dadurch gekennzeichnet, dass** vor der Montage des Gelenks der Ausgleichskörper (48) eine Ausgangsform hat, dass ein vorderer Teilbereich des Ausgleichskörpers (48) in den Haltebereich (30) einsetzbar ist und dass nach der Montage der Ausgleichskörper (48) eine Endform hat, in der er plastisch gegenüber der Ausgangsform verformt ist.

## Claims

1. A clearance-free hinge for motor vehicle seats, comprising a) a first hinge arm (20) and a second hinge arm (22) that each have a bore (24 or 26), b) a hinge pin (28) extending through these bores (24, 26), the bore (24) of the first hinge arm (20) having a retaining zone (30) and a compensation zone (32) situated axially one behind the other, the compensation zone (32) having greater radial internal dimensions than the retaining zone (30), and the compensation zone (32) being delimited by a substantially radially extending step (34), which adjoins the retaining zone (30), and an inner lining (36), and c) a compensation member (48) that rests against the inner lining (36), the step (34) and the hinge pin (28), and is axially loaded towards the step (34) in such a way, during the assembly of the hinge, that it is deformed and fills the space between the hinge pin (28), the step (34) and the inner lining (36).

2. The clearance-free hinge according to claim 1, **characterised in that** the inner lining (36) lies on a cone with an opening angle between 0 and 90°, preferably 10 and 45°.

3. The clearance-free hinge according to claim 1, **characterised in that** the compensation member (48), prior to the assembly of the hinge and preferably also after the assembly of the hinge, has a greater axial length than the distance between the step (34) and an outer surface (38) of the first hinge arm (20) at which the compensation zone (32) opens.

4. The clearance-free hinge according to claim 1, **characterized in that** the hinge pin (28) has a radial shoulder (44) which is supported either on an inner surface of the first hinge arm (20) or on an inner surface (54) of the second hinge arm (22) located directly opposite thereto.

5. The clearance-free hinge according to claim 1, **characterised in that** the compensation member (48) is made from a plastic that is mechanically deformable, in particular from LDPE.

6. The clearance-free hinge according to claim 1, **characterized in that** the compensation zone (32) has an axial length that is not less than 50% of the axial length of the first joint arm (20).

7. The clearance-free hinge according to claim 1, **characterised in that** the compensation member (48) has an initial shape prior to the assembly of the hinge, that a front partial region of the compensation member (48) can be inserted into the retaining zone (30), and that, after the assembly, the compensation member (48) has a final shape in which it is plastically deformed in relation to the initial shape.

## Revendications

1. Articulation exempte de jeu pour sièges de véhicule automobile, comprenant a) un premier bras d'articulation (20) et un deuxième bras d'articulation (22) qui présentent chacun un perçage (24 et 26 respectivement), b) une goupille d'articulation (28) traversant ces perçages (24, 26), le perçage (24) dudit premier bras d'articulation (20) présentant, axialement l'une derrière l'autre, une zone de maintien (30) et une zone d'équilibrage (32), ladite zone d'équilibrage (32) présentant des dimensions intérieures radiales supérieures à celles de ladite zone de maintien (30), et ladite zone d'équilibrage (32) étant délimitée par un gradin (34) qui s'étend pour l'essentiel radialement et qui est contigu à la zone de maintien (30) et par une enveloppe intérieure (36), ainsi que c) un corps d'équilibrage (48) qui s'appuie sur ladite enveloppe intérieure (36), sur ledit gradin (34) et sur ladite goupille d'articulation (28) et qui, lors du montage de l'articulation, est sollicité axialement vers le gradin (34) de telle sorte qu'il est déformé et qu'il remplit l'espace situé entre ladite goupille d'articulation (28), ledit gradin (34) et ladite enveloppe intérieure (36).

2. Articulation exempte de jeu selon la revendication 1, **caractérisée par le fait que** ladite enveloppe intérieure (36) est située sur un cône ayant un angle d'ouverture compris entre 0 et 90°, de préférence entre 10 et 45°.

3. Articulation exempte de jeu selon la revendication 1, **caractérisée par le fait que**, avant le montage de l'articulation et, de préférence, également après le montage de l'articulation, ledit corps d'équilibrage (48) présente une longueur axiale supérieure à la distance séparant le gradin (34) et une surface extérieure (38) du premier bras d'articulation (20), sur laquelle débouche ladite zone d'équilibrage (32).

4. Articulation exempte de jeu selon la revendication 1, **caractérisée par le fait que** ladite goupille d'articulation (28) présente un épaulement radial (44) qui prend appui soit sur une surface intérieure du premier bras d'articulation (20) soit sur une surface intérieure (54) du deuxième bras d'articulation (22), qui est située directement en regard de celle-ci.

5. Articulation exempte de jeu selon la revendication 1, **caractérisée par le fait que** ledit corps d'équilibrage (48) est réalisé dans une matière plastique qui est déformable mécaniquement, en particulier en LDPE.

6. Articulation exempte de jeu selon la revendication 1, **caractérisée par le fait que** ladite zone d'équilibrage (32) présente une longueur axiale qui n'est pas inférieure à 50 % de la longueur axiale du premier bras d'articulation (20).

7. Articulation exempte de jeu selon la revendication 1, **caractérisée par le fait que**, avant le montage de l'articulation, ledit corps d'équilibrage (48) présente une forme initiale, qu'une zone partielle avant du corps d'équilibrage (48) peut être insérée dans ladite zone de maintien (30) et que, après le montage, le corps d'équilibrage (48) présente une forme finale dans laquelle il est déformé plastiquement par rapport à la forme initiale.
